# EUROPEAN PATENT SPECIFICATION

(11) **EP 0 547 570 B1**
(45) Date of publication and mention of the grant of the patent: **01.05.1996**
(21) Application number: 92121376.5
(22) Date of filing: 16.12.1992
(51) Int. Cl.: B62D 1/22, B62D 5/30

(54) **Servo-steering system for steering a vehicle**
Servolenkung für ein Fahrzeug
Direction assistée pour véhicule

(30) Priority: 18.12.1991 SE 9103743
(43) Date of publication of application: 23.06.1993
(73) Proprietor: ABB TRUCK AB, S-871 29 Härnosand (SE)
(72) Inventor: Forsström, Nils Erik, S-871 42 Härnösand (SE); Lundgren, Staffan, S-871 00 Härnösand (SE); Lundkvist, Ulf, S-871 62 Härnösand (SE)
(74) Representative: Boecker, Joachim, Dr.-Ing.

(56) References cited:
- EP-A- 0 041 421
- DE-A- 3 941 665
- FR-A- 1 143 837
- GB-A- 828 995
- SE-B- 466 099

## Description

The invention relates to a servo-steering system according to the precharacterising part of claim 1 for steering a vehicle. More particularly, the invention relates to an emergency safe steering system for vehicles comprising two integrated, separately servo-assisted units.

Known servo units are designed such that a change in position of a member, for example a steering wheel, a lever or a shuttle on a vehicle, results in a proportional change of an executing device, for example a steering cylinder in a guide wheel.

A servo unit for steering of vehicles may comprise an electric motor which drives a hydraulic pump. In a servo system for electrically driven vehicles, the vehicle battery drives the electric motor.

The hydraulic pump pumps pressure medium to a control valve, which is connected to a primary steering member, for example a steering wheel. When the steering wheel is turned, the control valve supplies the executing device with pressure medium. The executing device is adapted to cause the guide wheel to turn by means of pressure medium. The turning of the guide wheel corresponds to the turning angle of the steering wheel. The number of turns of the steering wheel for full deflection of the guide wheel is dependent on the displacement of the control valve. For the guide wheel to turn from the maximum position in one direction to the maximum position in the other direction, the steering wheel may need to be turned +/- 2 turns from an initial position with the guide wheel parallel to the longitudinal axis of the vehicle. Repeated use of such an operation may give rise to musculo-skeletal injuries.

From an ergonomic point of view, it would thus be desirable to have a steering process in which a small movement permits a large turning of the guide wheel.

It is known to arrange a secondary steering member in the form of a so-called joy-stick on an arm rest in the vehicle. However, for safety reasons this is not suitable since it takes too much time to move the hand from the arm rest to the steering wheel in case of emergency steering, for, in the event of loss of energy supply, the vehicle, which may start free-rolling, must be able to be emergency steered until it stops.

A similar servo-steering system for steering a vehicle according to the preamble of claim 1 is known from the SE-B-466 099. Here, the secondary steering member consists of a turnable disk which is mounted at the front end of in arm rest.

FR-A-1 143 837 describes a servo-steering system for steering a vehicle, for example a boat or a truck, with a primary and a secondary steering member, whereby the secondary steering member is, as the primary steering member, also shaped as a wheel of decreased diameter, which is arranged concentrically within the steering column and the steering wheel of the primary steering device.

All the afore-mentioned two-component steering device make it necessary that the vehicle conductor has to move his arm and hand, when changing from the primary steering member to the secondary steering member or vice versa. This does not only cause inconvenience, but also takes valuable time in case of demand of an emergency steering by means of the presently redundant steering member.

The invention aims at developing a servo-steering system of the above-mentioned kind which is both ergonomic and safe from the point of view of emergency steering.

To achieve this aim the invention suggests a servo-steering system according to the introductory part of claim 1, which is characterized by the features of the characterizing part of claim 1.

Further developments of the invention are characterized by the features of the additional claims.

The invention solves a problem which has been known for a long time. The vehicle need not, of course, be electrically powered in order for a steering system according to the invention to be used.

The invention comprises arranging, in a servo system, a secondary steering member in immediate proximity to the primary steering member of the vehicle.

The servo-steering system according to the invention comprises a first servo unit which comprises a primary steering member and a control valve and a second servo unit which comprises a secondary steering member, an electronic unit and a hydraulic valve, the hydraulic valve being supplied with pressure medium via the control valve.

The hydraulic valve is arranged in parallel with the control valve. The hydraulic valve may, for example, consist of a proportional valve. The electronic unit is arranged between the hydraulic valve and the secondary steering member.

The secondary steering member comprises a transducer of some kind, for example an angular transducer, a potentiometer, or a toggle switch.

The movement of the secondary steering member, with respect to magnitude and direction, gives rise to an electric signal which is recorded by the electronic unit. The electronic unit adapts the electric signal for transmission to the hydraulic valve. The hydraulic valve supplies an executing device, for example in the form of a steering cylinder of a guide wheel or a hydraulic motor, with a quantity of pressure medium corresponding to a movement of the executing device which is proportional to the movement of the secondary steering member.

The movement of the primary steering member is given priority over the movement of the secondary steering member. A sensor, for example according to EP-A-534 332 (prior art under Art. 54(3) EPC), is arranged to sense the movement of the primary steering member. Upon a movement of the primary steering member, a signal is delivered to the electronic unit which then causes an interruption of the supply of pressure medium to the hydraulic valve. The primary steering member is directly connected to the control valve and causes pressure medium directly to be passed from the control valve to the executing device.

The system may possibly be designed as a feedback system. Feedback coupling may take place, for example, by arranging a transducer so as to sense the change in the position of the executing device in relation to the movement of the secondary steering member.

When mounting the system according to the invention on, for example, the steering wheel of a truck, the driver does not have to move his arm when changing between operating the primary and the secondary steering member. During normal operation, the vehicle is steered by means of the secondary steering member and consequently the driver need not carry out large movements of the steering wheel. In this way the time it takes to move the hand from a secondary to a primary steering member is minimized while at the same time the running ergonomics is considerably improved.

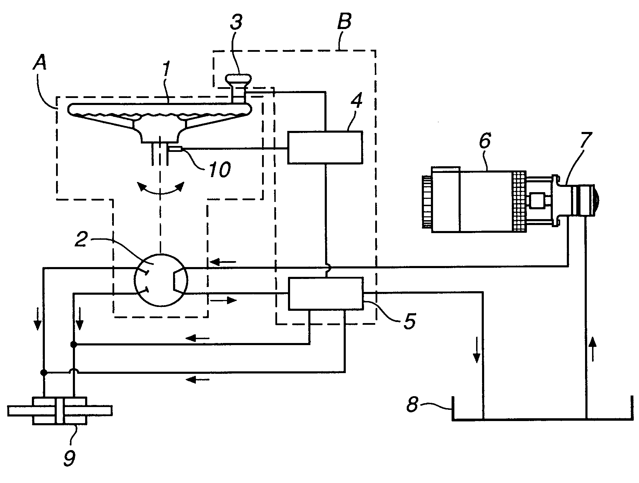

The invention will now be described in greater detail below with reference to the accompanying drawing, which schematically shows the members included in the servo-steering system according to the invention.

To show in a simple and clear way how a servo-steering system according to the invention, with a first servo unit A and a second servo unit B, can be utilized, an embodiment will be described in which the two servo units A, B are used for steering of a vehicle according to the accompanying drawing. A simplified flow diagram for the hydraulic system is also shown in the drawing.

The first servo unit A comprises a primary steering member, in the form of a steering wheel 1, and a control valve 2. The second servo unit B comprises a secondary steering member, in the form of a turnable knob 3, an electronic unit 4 and a hydraulic valve in the form of a proportional valve 5. The proportional valve 5 is supplied with pressure medium from the control valve 2. The design of the knob 3 also allows it to serve as a steering wheel swivel.

A motor 6 drives a hydraulic pump 7 which pumps pressure medium from a pressure medium tank 8 to the control valve 2. Depending on which servo unit A, B is active, the pressure medium is passed from the control valve 2 either to the proportional valve 5 or directly to an executing device, in the form of a steering cylinder 9 in a guide wheel (not shown).

When using the second servo unit B, that is, when using the knob 3 for steering the vehicle, an electric signal is transmitted to the electronic unit 4 depending on the movement of the knob 3, with respect to direction and magnitude. The signal is transmitted from the electronic unit 4 to the proportional valve 5, whereby the steering cylinder 9 is supplied with a quantity of pressure medium which corresponds to a movement of the guide wheel which is proportional to the movement of the knob 3.

A sensor 10 is adapted to sense the movements of the steering wheel 1 with respect to direction and magnitude. When turning the steering wheel 1, an electric signal is transmitted from the sensor 10 to the electronic unit which brings about an interruption of the supply of pressure medium to the proportional valve 5, pressure medium thus being passed directly via the control valve 2 to the steering cylinder 9 of the guide wheel. Interruption of the supply of pressure medium to the proportional valve 5 when turning the steering wheel 1 means that priority is given to the movement of the steering wheel 1.

In case of loss of function of the second servo unit B, steering can be performed via the first servo unit A and vice versa.

The primary steering member, the steering wheel 1, is adapted such that it is able to steer mechanically - without servo assistance - the executing device 9 also in the case of loss of energy supply.

## Claims

1. Servo-steering system for steering a vehicle via an executing device (9) and a control valve (2), said servo-steering system comprising a first servo unit (A) with a primary steering member (1) and a second servo unit (B) with a secondary steering member (3), **characterized** in that the secondary steering member (3) is arranged on the primary steering member (1) so that, when the primary steering member (1) is moved, the secondary steering member (3) is moved with it, without becoming activated.

2. Servo-steering system according to claim 1, **characterized** in that the first servo unit (A) is arranged in parallel with the second servo unit (B) and that the first servo unit comprises the primary steering member (1) and the control valve (2) and that the second servo unit comprises the secondary steering member (3), an electronic unit (4) and a hydraulic valve (5).

3. Servo-steering system according to claim 1, **characterized** in that the primary steering member (1) is arranged as a steering wheel in a vehicle and that the executing device (9) is arranged as a steering cylinder in said vehicle.

4. Servo-steering system according to claim 1 or 2, **characterized** in that the primary steering member (1) is the steering wheel in a vehicle and that the executing device (9) is a hydraulic motor in said vehicle.

5. Servo-steering system according to claim 3 or 4, **characterized** in that the secondary steering member (3) is designed as a turnable knob (3) arranged on the periphery of the steering wheel.

6. Servo-steering according to claim 5, **characterized** in that the knob (3) comprises a transducer adapted to cause the hydraulic valve to supply the executing device with pressure medium.

7. Servo-steering system according to any of the preceding claims, **characterized** in that the primary steering member is given priority such that a movement thereof causes an interruption of the supply of pressure medium to the hydraulic valve.

8. Servo-steering system according to any of claims 2 to 7, **characterized** in that the hydraulic valve is a proportional valve.

9. Servo-steering system according to any of the preceding claims, **characterized** in that the vehicle is an electrically driven vehicle.

## Patentansprüche

1. Servo-Lenksystem zum Lenken eines Fahrzeugs über ein Stellglied (9) und ein Steuerventil (2), wobei zu dem Servo-Lenksystem eine erste Servoeinheit (A) mit einem primären Lenkglied (1) und eine zweite Servoeinheit (B) mit einem sekundären Lenkglied (3) gehören, **dadurch gekennzeichnet**, daß das sekundäre Lenkglied (3) derart an dem primären Lenkglied (1) angeordnet ist, daß bei einer Bewegung des primären Lenkgliedes (1) das sekundäre Lenkglied (3) mit dem erstgenannten mitbewegt wird, ohne aktiviert zu werden.

2. Servo-Lenksystem nach Anspruch 1, **dadurch gekennzeichnet**, daß die erste Servoeinheit (A) parallel zur zweiten Servoeinheit (B) angeordnet ist, daß die erste Servoeinheit das primäre Lenkglied (1) und das Steuerventil (2) enthält und daß die zweite Servoeinheit das sekundäre Lenkglied (3), eine elektronische Einheit (4) und ein hydraulisches Ventil (5) enthält.

3. Servo-Lenksystem nach Anspruch 1, **dadurch gekennzeichnet**, daß das primäre Lenkglied (1) als Lenkrad eines Fahrzeugs angeordnet ist und daß das Stellglied (9) als Lenkzylinder in dem genannten Fahrzeug angeordnet ist.

4. Servo-Lenksystem nach Anspruch 1 oder 2, **dadurch gekennzeichnet**, daß das primäre Lenkglied (1) das Lenkrad in einem Fahrzeug ist und daß das Stellglied (9) ein hydraulischer Motor in dem genannten Fahrzeug ist.

5. Lenksystem nach Anspruch 3 oder 4, **dadurch gekennzeichnet**, daß das sekundäre Lenkglied (3) als ein drehbarer Knopf (3) ausgebildet ist, der an der Peripherie des Lenkrades angeordnet ist.

6. Lenksystem nach Anspruch 5, **dadurch gekennzeichnet**, daß der Knopf (3) einen Geber enthält, welcher das hydraulische Ventil veranlaßt, das Stellglied mit Druckmittel zu versorgen.

7. Lenksystem nach einem der vorhergehenden Ansprüche, **dadurch gekennzeichnet**, daß das primäre Lenkglied Priorität in der Weise genießt, daß eine Bewegung desselben eine Unterbrechung des Zuflusses von Druckmittel zum hydraulischen Ventil verursacht.

8. Lenksystem nach einem der Ansprüche 2 bis 7, **dadurch gekennzeichnet**, daß das hydraulische Ventil ein Proportionalventil ist.

9. Lenksystem nach einem der vorhergehenden Ansprüche, **dadurch gekennzeichnet**, daß das Fahrzeug ein elektrisch angetriebenes Fahrzeug ist.

## Revendications

1. Système de direction assistée pour diriger un véhicule par l'intermédiaire d'un dispositif (9) d'exécution et d'une vanne (2) de commande, ce système de direction assistée comprenant une première unité (A) d'assistance comportant un élément (1) de direction primaire et une seconde unité (B) d'assistance comportant un élément (3) de direction secondaire, caractérisé en ce que l'élément (3) de direction secondaire est disposé sur l'élément (1) de direction primaire de sorte que, lorsque l'élément (1) de direction primaire est déplacé, l'élément (3) de direction secondaire est déplacé avec lui, sans être activé.

2. Système de direction assistée suivant la revendication 1, caractérisé en ce que la première unité (A) d'assistance est montée en parallèle avec la seconde unité (B) d'assistance et en ce que la première unité d'assistance comprend l'élément (1) de direction primaire et la vanne (2) de commande et en ce que la seconde unité d'assistance comprend l'élément (3) de direction secondaire, une unité (4) électronique et une vanne (5) hydraulique.

3. Système de direction assistée suivant la revendication 1, caractérisé en ce que l'élément (1) de direction primaire est agencé sous la forme d'un volant de conduite dans un véhicule et en ce que le dispositif (9) d'exécution est agencé sous la forme d'un cylindre de direction dans le véhicule.

4. Système de direction assistée suivant la revendication 1 ou 2, caractérisé en ce que l'élément (1) de direction primaire est le volant de direction dans un véhicule et en ce que le dispositif (9) d'exécution est un moteur hydraulique dans le véhicule.

5. Système de direction assistée suivant la revendication 3 ou 4, caractérisé en ce que l'élément (3) de direction secondaire est conçu sous la forme d'un bouton (3) pouvant être tourné et disposé à la périphérie du volant de direction.

6. Système de direction assistée suivant la revendication 5, caractérisé en ce que le bouton (3) comprend un transducteur qui est adapté pour faire en sorte que la vanne hydraulique alimente le dispositif d'exécution en un fluide sous pression.

7. Système de direction assistée suivant l'une quelconque des revendications précédentes, caractérisé en ce qu'il est donné priorité à l'élément de direction primaire de manière que son déplacement entraîne une interruption de l'alimentation en un fluide sous pression de la vanne hydraulique.

8. Système de direction assistée suivant l'une quelconque des revendications 2 à 7, caractérisé en ce que la vanne hydraulique est une vanne de type proportionnel.

9. Système de direction assistée suivant l'une quelconque des revendications précédentes, caractérisée en ce que le véhicule est un véhicule électrique.
